(19) **Europäisches Patentamt / European Patent Office / Office européen des brevets**

(11) **EP 3 311 075 B1**

(12) **FASCICULE DE BREVET EUROPEEN**

(45) Date de publication et mention de la délivrance du brevet:
**09.03.2022 Bulletin 2022/10**

(21) Numéro de dépôt: **16733371.5**

(22) Date de dépôt: **21.06.2016**

(51) Classification Internationale des Brevets (IPC):
**F23J 15/00** *(2006.01)*   **B01D 53/83** *(2006.01)*
**B01D 53/90** *(2006.01)*

(52) Classification Coopérative des Brevets (CPC):
**F23J 15/003; B01D 53/83;** B01D 2251/402;
B01D 2251/404; B01D 2251/604; B01D 2251/606;
B01D 2257/2045; B01D 2257/2047;
B01D 2257/2064; B01D 2257/302; B01D 2257/602;
B01D 2258/0283; B01D 2259/128; F23J 2215/20;
F23J 2215/301;                           (Cont.)

(86) Numéro de dépôt international:
**PCT/EP2016/064311**

(87) Numéro de publication internationale:
**WO 2016/207159 (29.12.2016 Gazette 2016/52)**

(54) **DISPOSITIF ET PROCÉDÉ DE TRAITEMENT DE GAZ DE FUMÉES**

VORRICHTUNG UND VERFAHREN ZUR BEHANDLUNG VON RAUCHGASEN

DEVICE AND METHOD FOR TREATING FLUE GASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2015 BE 201505378**

(43) Date de publication de la demande:
**25.04.2018 Bulletin 2018/17**

(73) Titulaire: **S.A. Lhoist Recherche et Développement**
**1342 Ottignies-Louvain-la-Neuve (BE)**

(72) Inventeurs:
 • **DE BOIS, Kevin**
   **5020 Vedrin (BE)**
 • **LALOUX, Donatien**
   **5530 Dorinne (BE)**

(74) Mandataire: **Gevers Patents**
**Intellectual Property House**
**Holidaystraat 5**
**1831 Diegem (BE)**

(56) Documents cités:
**EP-A2- 0 337 073    EP-A2- 1 890 081**
**US-A- 4 842 834    US-A1- 2013 125 749**

**(Cont. page suivante)**

(52) Classification Coopérative des Brevets (CPC):
(Cont.)
F23J 2215/60

**EP 3 311 075 B1**

**Description**

La présente invention concerne un procédé de traitement de fumées de combustion, aussi appelé procédé de traitement de gaz de fumées, dans une conduite de four par un composé pulvérulent ainsi que le dispositif pour sa mise en oeuvre.

Par conduite de four, au sens de la présente invention, on entend la zone de postcombustion (également appelée chaudière) et/ou toute conduite ou tout dispositif dans lesquels passent des gaz de fumées, en aval de la zone de postcombustion et en amont de la cheminée d'évacuation desdits gaz de fumées.

Le procédé et le dispositif visés par la présente invention sont applicables au traitement des fumées issues d'une combustion de combustibles conventionnels ou de substitution, liquides ou solides. Ces combustions ou traitements thermiques sont effectués dans des enceintes telles que des chaudières, des fours, des incinérateurs, sans que ceci soit limitatif, qui seront dans la suite du texte appelées indifféremment fours.

Ces combustions produisent des fumées à haute température qui sont généralement évacuées dans l'atmosphère par une cheminée. Outre les cendres volantes, ces fumées comportent généralement des gaz acides tels que HCl, HF, $SO_2$, $SO_3$,... et d'autres polluants tels que les métaux lourds (Hg,...), les dioxines et/ou les furannes. Ces gaz sont nocifs pour l'environnement et la santé, et il est souhaitable de les éliminer avant d'évacuer les fumées dans l'atmosphère.

A cette fin, un procédé connu, appelé abattement, consiste en l'injection de réactifs pulvérulents, dans la conduite de four, au sein des fumées. De tels composés incluent notamment des composés calco-magnésiens, tels que de la chaux hydratée pulvérulente, ou des composés carbonés tels que du charbon actif ou du coke de lignite, par exemple. On entend par chaux hydratée pulvérulente, également appelée chaux éteinte, un ensemble de particules solides principalement constituées d'hydroxyde de calcium $Ca(OH)_2$. D'autres composés minéraux peuvent aussi être utilisés tels que des composés sodiques comme un carbonate ou un bicarbonate de sodium ou encore les composés utilisés pour l'abattement des dioxines, furannes et/ou métaux lourds dont le mercure, comme par exemple, ceux à base de phyllosilicates, tels la sépiolite ou l'halloysite ou analogues.

Un tel procédé d'abattement impose cependant de nombreuses contraintes, en termes de débit de transport, de débit d'injection et de dispersion radiale du composé pulvérulent au sein de la conduite de four, qui sont actuellement difficiles à concilier.

En premier lieu, l'injection de la poudre (composé pulvérulent) dans la conduite de four doit être réalisée à un débit supérieur aux débits des fumées présentes dans ladite conduite de four, et ce, afin d'éviter que la poudre s'y disperse mal et, dans certains cas, s'agglomère contre les parois de la conduite de four, sous l'effet d'une pression trop élevée de ces gaz. La vitesse de telles fumées peut atteindre plus de 30 m/s, voire plus de 50 m/s.

En deuxième lieu, le transport de la poudre jusqu'au point d'injection dans la conduite de four doit être réalisé à des vitesses de l'ordre de 15 à 20 m/s, des vitesses plus élevées risquant de conduire à des phénomènes de friction/d'attrition et/ou de colmatage de la poudre dans la conduite de transport, ce dernier phénomène pouvant également conduire, lorsque la poudre est à base de chaux éteinte, à une carbonatation de celle-ci.

Enfin, la poudre doit être dispersée de façon homogène sur toute la section transversale de la conduite de four (par rapport au flux des fumées dans la conduite de four) afin de permettre un abattement homogène et efficace des polluants gazeux. Cette dispersion dépend notamment de la taille de la conduite de four ainsi que du débit des gaz qui la traversent. Or, une telle conduite présente généralement, en son centre, des <<veines >>, à savoir des zones où la vitesse des gaz de fumées est plus importante, ce qui nuit à une distribution homogène de la poudre au sein de la conduite de four. Pour résoudre ces problèmes de dispersion, on utilise actuellement des « lances pénétrantes », c'est-à-dire des canalisations métalliques qui pénètrent à l'intérieur de la conduite de four et qui sont donc entièrement soumises aux fumées.

Ces « lances pénétrantes » présentent encore malgré tout de nombreux inconvénients.

Tout d'abord, elles résistent très difficilement aux conditions de température et d'acidité auxquelles elles sont exposées dans la conduite de four et présentent une durée d'utilisation très limitée, notamment inférieure à un mois lorsqu'elles sont soumises à de hautes températures. Elles nécessitent donc un remplacement fréquent ce qui, en plus de générer des coûts d'exploitation non négligeables, requiert d'arrêter le four, parfois pendant plusieurs jours. Relancer la combustion après chaque arrêt de four, pour le remplacement des lances pénétrantes, est problématique dès lors que ces fours n'atteignent ni rapidement ni aisément leur équilibre dans la combustion.

Ces « lances pénétrantes » sont également sujettes au colmatage intérieur à cause des propriétés du composé pulvérulent et de son pouvoir d'agglomération.

Par conséquent, ces « lances pénétrantes », bien que permettant une bonne dispersion de la poudre dans la conduite de four, posent de nombreux problèmes de mise en oeuvre, notamment en termes de maintenance, peu compatibles avec l'application visée puisqu'elles ne permettent pas un fonctionnement optimal du four.

Le document US 2013/0125749 décrit un dispositif ayant les caractéristiques du préambule de la revendication 1 et un procédé d'abattement de gaz acides et de métaux lourds dans une conduite de four utilisant une tuyère de transport d'absorbant et une tuyère d'injection d'air périphérique, ces tuyères étant concentriques et débouchant à la surface interne de la conduite de four. Ce procédé et ce dispositif souffrent cependant d'inconvénients.

Tout d'abord, ils sont applicables à des températures de fumées inférieures ou égales à 454°C (850°F). De telles températures ne permettent pas toujours d'atteindre les conditions optimales d'abattement. En effet, la température optimale d'abattement de polluants gazeux dépend notamment de la nature du polluant à abattre ainsi que de la nature du composé pulvérulent utilisé. Par exemple, dans le cas d'un composé pulvérulent à base de chaux éteinte, il a été constaté que la réaction entre la chaux éteinte pulvérulente et le $SO_2$ gazeux peut notamment être favorisée dans la gamme de température comprise entre 850°C (1562°F) et 1150°C (2102°F).

De plus, ce document suggère de mettre en oeuvre des débits d'air périphérique extrêmement importants, jusqu'à 6 000 m$^3$/h, conduisant à un ratio de débit massique d'air périphérique sur le débit des gaz de fumées compris entre 3 et 5 %. De tels débits vont inévitablement perturber le fonctionnement général de l'installation de traitement des gaz de fumées.

En effet, avec des débits d'air périphérique aussi élevés, comparativement au débit des gaz de fumées, la quantité d'air apporté dans les gaz de fumées n'est pas négligeable et va notamment entrainer un refroidissement indésirable de ces gaz de fumées, réduisant dès lors le rendement énergétique global du four. Un tel dispositif aura également pour effet d'augmenter le débit total et la teneur en oxygène des gaz de fumées situées en aval de celui-ci, obligeant dès lors l'opérateur à modifier sa ligne de traitement des gaz de fumées en conséquence.

Il existe également des procédés de dénitrification des gaz de fumées à l'aide d'une solution aqueuse d'ammoniaque comme notamment décrit dans le document EP0337073 qui divulgue également un dispositif pour la mise en oeuvre de ce procédé. Il est évident que des procédés de ce genre ne sont pas confrontés aux mêmes problèmes que lors d'injection de produits pulvérulents, notamment concernant les contraintes de débit de transport.

La présente invention a donc pour but de pallier les inconvénients de l'état de la technique en procurant un dispositif de traitement de fumées par un composé pulvérulent d'abattement de polluant qui ne souffre pas des inconvénients précités, à savoir qui procure un rendement d'abattement de polluant élevé sans recourir à un dispositif pénétrant et en perturbant le moins possible le fonctionnement global de l'installation de traitement des gaz de fumées.

Il a pour cela été mis au point un dispositif et un procédé de traitement par un composé pulvérulent d'abattement de polluants de gaz de fumées dans une conduite de four permettant de s'adapter à une large gamme de conditions opératoires, notamment en termes de température des gaz de fumées à traiter, de nature du polluant à abattre et de nature du composé pulvérulent utilisé, sans modifier sensiblement les autres caractéristiques des fumées à traiter (en particulier leur débit et leur température).

Ainsi, selon un premier objet, l'invention concerne un dispositif d'injection de composé pulvérulent d'abattement de polluants de gaz de fumées dans une conduite de four, ledit dispositif comprenant :

- une chambre reliée à une conduite périphérique et agencée pour être reliée d'une part à un premier élément soufflant agencé pour souffler un gaz périphérique dans ladite chambre et dans ladite conduite périphérique et d'autre part à ladite conduite de four par l'intermédiaire de ladite conduite périphérique,
- ladite conduite périphérique comprenant une première partie de diamètre DP1, reliée à la chambre, et une deuxième partie de diamètre DP2, opposée à la première partie, présentant une extrémité aval, et prévue pour être en communication avec la conduite de four,
- une conduite de transport de composé pulvérulent prévue pour être reliée à un deuxième élément soufflant agencé pour souffler un gaz de transport dans ladite conduite de transport, simultanément au jet de gaz périphérique, ladite conduite de transport présentant un diamètre DT et une extrémité aval,

ladite première partie de la conduite périphérique étant traversée par ladite conduite de transport de manière concentrique et longitudinalement, de telle manière que l'extrémité aval de ladite conduite de transport soit localisée dans un plan sécant entre la première et la deuxième partie de la conduite périphérique.

Le diamètre (DT) de la conduite de transport et le diamètre (DP2) de la deuxième partie de la conduite périphérique sont reliés par la relation suivante :

$$0 < DP2 - DT < \tfrac{1}{2} DT.$$

Ce dispositif selon la présente invention est caractérisé en ce que ladite conduite de transport traverse la chambre de façon étanche et en ressort de façon concentrique à la conduite périphérique à l'intérieur de ladite conduite périphérique, et en ce que la deuxième partie de la conduite périphérique présente une longueur L supérieure ou égale au diamètre (DP2) de la deuxième partie de la conduite périphérique. Au sens de la présente invention, les termes « aval » et « amont » sont utilisés en faisant référence au sens d'écoulement des gaz de fumées. Par exemple, si un gaz parcourt une conduite dans un sens d'écoulement, il entrera par une extrémité amont de la conduite et sortira par une extrémité aval de la conduite.

Au sens de la présente invention, le gaz de transport et/ou le gaz périphérique sont de préférence l'air ambiant de l'atmosphère, indépendamment l'un de l'autre.

En effet, par gaz de transport, au sens de la présente invention, on entend tout gaz, en particulier de l'air, qui permet de véhiculer, par transport pneumatique, le composé pulvérulent dans la conduite de transport, vers la conduite de four.

Par gaz périphérique, au sens de la présente invention, on entend tout gaz, en particulier de l'air, qui est apporté dans la conduite périphérique, à la périphérie de la conduite de transport.

La présence de la chambre, reliée à la conduite périphérique, et le fait que la conduite de transport la traverse de façon étanche permet de former deux jets de gaz coaxiaux ; un flux de transport de composé pulvérulent et un flux de gaz périphérique. Par ailleurs, la présence de la deuxième partie de longueur L de la conduite périphérique ainsi que les proportions relatives des diamètres de la conduite de transport (DT) et de la deuxième partie de la conduite périphérique (DP2) permettent de créer un effet venturi et d'accélérer les jets de gaz en sortie du dispositif, améliorant ainsi la pénétrabilité du composé pulvérulent injecté dans la conduite de four. De cette façon, il est possible de distribuer la poudre dans la conduite de four de manière optimale sans devoir recourir à un dispositif invasif, contrairement aux « lances pénétrantes » de l'art antérieur, et tout en réduisant la quantité de gaz périphérique nécessaire pour permettre la bonne pénétration du composé pulvérulent d'abattement dans la conduite de four, contrairement au dispositif et procédé de l'art antérieur US 2013/0125749.

Réduire la quantité de gaz périphérique permet de limiter la perturbation des propriétés des gaz de fumées (notamment leur température, leur débit et leur teneur en oxygène), contrairement au dispositif du document US 2013/0125749, ce dernier requérant un débit d'air périphérique très important.

Ainsi, la présente invention permet à la fois d'améliorer la récupération des calories présentes dans les gaz de fumées, dès lors que le jet de gaz périphérique refroidit beaucoup moins les gaz de fumées avant leur récupération. Elle permet aussi d'approcher et de maintenir les conditions optimales de température favorisant l'abattement des polluants par le composé pulvérulent injecté.

En effet, comme mentionné précédemment, certaines plages de température particulière permettent de favoriser la réaction d'abattement de polluants gazeux. Ces gammes de température optimales dépendent notamment de la nature du polluant à abattre et de la nature du composé pulvérulent utilisé. La présente invention, en raison du faible débit d'air périphérique utilisé, permet de ne pas modifier sensiblement la température des gaz de fumées, en particulier au point d'injection du composé pulvérulent, et donc de garantir un maintien de la température optimale de réaction.

Dans un mode de réalisation particulier de la présente invention, le diamètre DP1 est supérieur ou égal au diamètre DP2.

Dans un autre mode de réalisation particulier de la présente invention, le diamètre DP1 est inférieur ou égal au diamètre DP2.

Avantageusement, l'extrémité aval de la deuxième partie de la conduite périphérique est directement reliée à la conduite de four.

Dans un autre mode de réalisation avantageux de la présente invention, la conduite périphérique peut en outre comprendre une troisième partie comportant une portion amont munie d'une extrémité amont et une portion aval munie d'une extrémité aval, de diamètre DP3 inférieur au diamètre DP2, ladite extrémité amont étant prévue pour être reliée à l'extrémité aval de la deuxième partie de la conduite périphérique, ladite extrémité aval étant prévue pour être reliée à la conduite de four.

Ce mode de réalisation particulier permet de créer un deuxième effet venturi, améliorant dès lors davantage le phénomène d'accélération des jets de gaz en sortie du dispositif et donc la pénétrabilité du composé pulvérulent dans la conduite de four.

De préférence, l'extrémité aval de la troisième partie de la conduite périphérique est directement reliée à la conduite de four.

Par le terme « directement reliée à la conduite de four », on entend que l'extrémité aval de la deuxième partie ou de la troisième partie de la conduite périphérique aboutit tout au plus au niveau de la paroi interne de ladite conduite de four. Bien que dans le cadre de dispositif industriel, il ne puisse être totalement exclu que l'extrémité aval de la deuxième partie ou de la troisième partie de la conduite périphérique dépasse de manière non significative la paroi interne après avoir traversé l'épaisseur de la conduite de four, il est plutôt prévu selon la présente invention que l'extrémité aval de la deuxième partie ou de la troisième partie de la conduite périphérique aboutisse dans l'épaisseur de la conduite de four ou bien que l'extrémité aval de la deuxième partie ou de la troisième partie de la conduite périphérique soit reliée à la surface extérieure de la conduite de four.

Avantageusement, ladite portion amont de la troisième partie de la conduite périphérique présente une forme conique tronquée.

Selon un mode de réalisation préféré, ledit composé pulvérulent est un composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec u ≤5%, par rapport au poids total dudit composé calco-magnésien, la somme des fractions massiques a+b+x+y+z+t+u étant égale à 100% du poids total dudit composé calco-magnésien.

Avantageusement, ledit composé pulvérulent est un composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec u ≤ 3%, de préférence u ≤ 2%, en particulier u ≤ 1% par rapport au poids total dudit composé calco-magnésien, la somme des fractions massiques a+b+x+y+z+t+u étant égale à 100% du poids total dudit composé calco-magnésien.

Selon ces modes de réalisation préférés, la performance du dispositif d'abattement de gaz de fumées est encore améliorée pour l'abattement des polluants, en particulier de $SO_2$, à haute température. En effet, les composés calco-magnésiens sont particulièrement performants dans la plage de températures de gaz de fumées allant de 850°C à 1150°C, surtout lorsqu'il s'agit de capturer des polluants acides de type $SO_x$, souvent plus difficiles à capturer de manière efficace. A contrario, selon l'enseignement du document US 2013/0125749, ce résultat ne pouvait en aucun cas être atteint à cause des basses températures (inférieures à 454°C) présentes au site de mise en contact du composé pulvérulent, températures auxquelles c'est surtout la réaction de la chaux avec le $CO_2$ qui est favorisée, dans le cas d'un composé calco-magnésien sous forme d'hydroxyde de calcium.

Dans un autre mode de réalisation avantageux de la présente invention, le composé pulvérulent peut être choisi parmi les composés calco-magnésiens définis ci-dessus, les composés carbonés, tels que le charbon actif ou le coke de lignite, les composés minéraux sodiques, tels que le carbonate ou le bicarbonate de sodium, les composés minéraux à base de phyllosilicates, tels que la sépiolite ou l'halloysite, et leurs mélanges.

Avantageusement, le dispositif selon la présente invention comprend en outre :

- un premier élément soufflant relié à la chambre et agencé pour souffler un gaz périphérique dans ladite chambre et dans la conduite périphérique,
- un deuxième élément soufflant relié à la conduite de transport et agencé pour souffler un gaz de transport dans ladite conduite de transport,
- un moyen de dosage de composé pulvérulent relié d'une part à un réservoir de composé pulvérulent et d'autre part à la conduite de transport, en aval dudit deuxième élément soufflant par rapport à une direction d'écoulement du gaz de transport, agencés pour que le gaz de transport entraine le composé pulvérulent dosé.

Avantageusement, dans le dispositif selon la présente invention ledit premier élément soufflant et le deuxième élément soufflant comprennent des moyens d'ajustements de débits de telle façon que les débits du premier élément soufflant et du deuxième élément soufflant soient ajustables séparément.

Cette caractéristique confère une grande souplesse d'utilisation au dispositif, lui permettant de s'adapter à une grande plage de caractéristiques des fumées (température, vitesse, polluants...), de diamètre de conduite et de composé pulvérulent d'abattement utilisé.

Avantageusement, le réservoir de composé d'abattement pulvérulent peut être un réservoir de composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec u ≤ 5%, par rapport au poids total dudit composé calco-magnésien, la somme des fractions massiques a+b+x+y+z+t+u étant égale à 100% du poids total dudit composé calco-magnésien.

Avantageusement, le réservoir de composé d'abattement pulvérulent peut être un réservoir de composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec u ≤ 3%, de préférence u ≤ 2%, en particulier u ≤ 1% par rapport au poids total dudit composé calco-magnésien, la somme des fractions massiques a+b+x+y+z+t+u étant égale à 100% du poids total dudit composé calco-magnésien.

De préférence, le composé calco-magnésien comprend au moins de la chaux hydratée.

Dans un autre mode de réalisation avantageux de la présente invention, le réservoir de composé d'abattement pulvérulent peut être un réservoir de composé pulvérulent choisi parmi les composés calco-magnésiens définis ci-dessus, les composés carbonés, tels que le charbon actif ou le coke de lignite, les composés minéraux sodiques, tels que le carbonate ou le bicarbonate de sodium, les composés minéraux à base de phyllosilicates, tels que la sépiolite ou l'halloysite, et leurs mélanges.

En pratique, plusieurs dispositifs d'injection de composé pulvérulent tels que définis ci-dessus peuvent être utilisés pour former un système d'injection de composé pulvérulent.

D'autres caractéristiques et avantages du dispositif selon la présente invention sont mentionnées dans les revendications annexées.

Selon un deuxième objet, l'invention concerne une conduite de four munie d'au moins un dispositif d'injection de composé pulvérulent d'abattement tel que défini ci-dessus.

D'autres caractéristiques et avantages de la conduite de four selon la présente invention sont mentionnées dans les revendications annexées.

Selon un troisième objet, l'invention concerne un procédé de traitement de gaz de fumées dans une conduite de four par un composé pulvérulent d'abattement de polluants de gaz de fumées, comprenant :

- une injection d'un jet de gaz de transport présentant un débit massique $Q_T$, ledit jet de gaz de transport étant prévu pour transporter ledit composé pulvérulent d'abattement au sein desdites fumées présentant un débit de gaz de fumées $Q_F$,
- simultanément, une injection d'un jet de gaz, de manière périphérique au jet de gaz de transport, formant un jet de gaz périphérique présentant un débit massique $Q_P$.

Ledit débit massique de gaz périphérique rapporté audit débit massique des gaz de fumées forme un ratio QP/QF compris entre 0,05% et 0,25 %.

Le procédé selon la présente invention permet de s'affranchir des « lances pénétrantes », c'est-à-dire des canalisations métalliques qui pénètrent à l'intérieur de la conduite de four et de tous les problèmes qui y sont liés. Il permet de concilier les contraintes de transport et d'injection de la poudre et de contrôler la distribution radiale de celle-ci afin d'atteindre les zones souhaitées dans la conduite de four, sans qu'il soit nécessaire d'utiliser un dispositif invasif tel qu'une lance pénétrante.

Par ailleurs, grâce à un rapport du débit de gaz périphérique sur le débit massique des fumées très faible, il permet de ne pas modifier sensiblement les caractéristiques des gaz de fumées du four (notamment en termes de température, débit, et teneur en oxygène) assurant ainsi le maintien de la température optimale de la réaction d'abattement et tout en évitant également de réduire le rendement énergétique global du four ou de perturber le fonctionnement global de l'installation de traitement de ces gaz de fumées.

A contrario, le document US 2013/0125749 enseigne d'utiliser un rapport de débit nettement supérieur afin de créer des turbulences pour disperser le flux de composé pulvérulent (mélanger) et former des remous de composé pulvérulent dans le flux de gaz porteur et incidemment dans le flux de gaz de fumées.

Dans un mode préférentiel du procédé selon la présente invention, ledit gaz de transport présente une vitesse $V_T$ et ledit gaz périphérique présente une vitesse $V_P$, la vitesse de gaz périphérique $V_P$ étant comprise entre deux fois et vingt fois la vitesse du gaz de transport $V_T$ selon $2V_T \leq V_P \leq 20V_T$.

Dans un mode de réalisation particulier de la présente invention, le débit massique du gaz de transport $Q_T$ ajouté au débit massique du gaz périphérique $Q_P$ rapporté au débit massique des gaz de fumées $Q_F$ forme un rapport $(Q_T + Q_P)/Q_F$ compris entre 0,1 et 0,5%. De telle façon, le rapport de la somme des débits massiques des gaz de transport et périphérique sur le débit massique des gaz de fumées est compris entre 0,1 et 0,5 %.

Avantageusement, le composé pulvérulent est injecté selon un débit massique $Q_A$, le débit massique du gaz de transport $Q_T$ rapporté au débit massique de composé pulvérulent formant un ratio $Q_T/Q_A$ compris entre 5 et 10. De cette façon, le rapport du débit massique de gaz de transport sur le débit massique de composé pulvérulent peut être compris entre 5 et 10.

Dans un mode préféré du procédé selon la présente invention, l'injection des jets de gaz de transport et de gaz périphérique s'effectue au niveau de la face interne de la conduite de four.

Avantageusement, dans le procédé selon la présente invention, la température des fumées à traiter est comprise entre 850° C et 1150° C.

De plus, dans le procédé selon la présente invention, la vitesse des fumées à traiter est comprise entre 2 m/s et 150 m/s, de préférence entre 3 et 50 m/s, en particulier entre 5 et 30 m/s

Dans un mode préféré, les vitesses des jets de gaz de transport et de gaz périphérique sont ajustées indépendamment l'une de l'autre.

Avantageusement, dans le procédé selon la présente invention, le gaz de transport et/ou le gaz périphérique est/sont de l'air, indépendamment l'un de l'autre.

Dans un procédé d'abattement de polluants, tel que le procédé selon la présente invention, les gaz de fumées comprennent des polluants choisis dans le groupe constitué des gaz acides, notamment soufrés et/ou halogénés, des métaux lourds, des furanes, des dioxines et leurs mélanges.

Plus particulièrement, dans le procédé selon la présente invention, les gaz acides comprennent des polluants choisis dans le groupe constitué du $SO_2$, $SO_3$, HCl, HF, HBr, et de leurs mélanges.

Dans un mode de réalisation avantageux de la présente invention, le composé pulvérulent peut être choisi parmi les composés calco-magnésiens, les composés carbonés, tels que le charbon actif ou le coke de lignite, les composés minéraux sodiques, tels que le carbonate ou le bicarbonate de sodium, les composés minéraux à base de phyllosilicates, tels que la sépiolite ou l'halloysite, et leurs mélanges.

Avantageusement, le composé pulvérulent d'abattement utilisé dans le procédé selon la présente invention, comprend un carbonate, un hydroxyde et/ou un oxyde d'un métal alcalino-terreux choisi parmi le calcium et le magnésium, ou un mélange de ceux-ci.

De préférence, le composé pulvérulent d'abattement comprend un composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec $u \leq 5\%$, par rapport au poids total dudit un composé calco-magnésien, la somme des fractions massiques a+b+x+y+z+t+u étant égale à 100% du poids total dudit composé calco-magnésien.

Avantageusement, ledit composé pulvérulent est un composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec $u \leq 3\%$, de préférence $u \leq 2\%$, en particulier $u \leq 1\%$ par rapport au poids total dudit composé calco-magnésien, la somme des fractions massiques a+b+x+y+z+t+u étant égale à 100% du poids total dudit composé calco-magnésien.

Selon un mode de réalisation préféré du procédé selon la présente invention, le composé pulvérulent comprend plus de 50% en poids, notamment plus de 90% en poids, d'hydroxyde de calcium $Ca(OH)_2$.

D'autres caractéristiques et avantages du procédé selon la présente invention sont mentionnées dans les revendications annexées.

D'autres caractéristiques, détails et avantages de l'invention ressortiront de la description donnée ci-après, à titre non limitatif et en faisant référence aux exemples et aux figures annexées.

La figure 1 représente un schéma de principe d'un mode de réalisation d'un dispositif d'injection permettant de mettre en oeuvre le procédé selon l'invention.

La figure 1A montre une vue en coupe selon la ligne de coupe A-A' sur la figure 1.

La figure 2 représente un schéma de principe d'un autre mode de réalisation d'un dispositif d'injection permettant de mettre en oeuvre le procédé selon l'invention.

La figure 3 représente un comparatif des performances de désulfurisation entre une installation pilote et des essais industriels pratiqués soit avec une lance métallique pénétrante de l'art antérieur soit avec le dispositif d'injection de la présente invention.

Les figures 4, 5A et 5B représentent des résultats de simulations numériques CFD (Computational Fluid Dynamics) de la répartition de composé pulvérulent d'abattement dans une même conduite de four, avec un dispositif et son procédé correspondant, selon la présente invention (Figure 4), en comparaison de l'art antérieur US 2013/0125749 (Figures 5A et 5B).

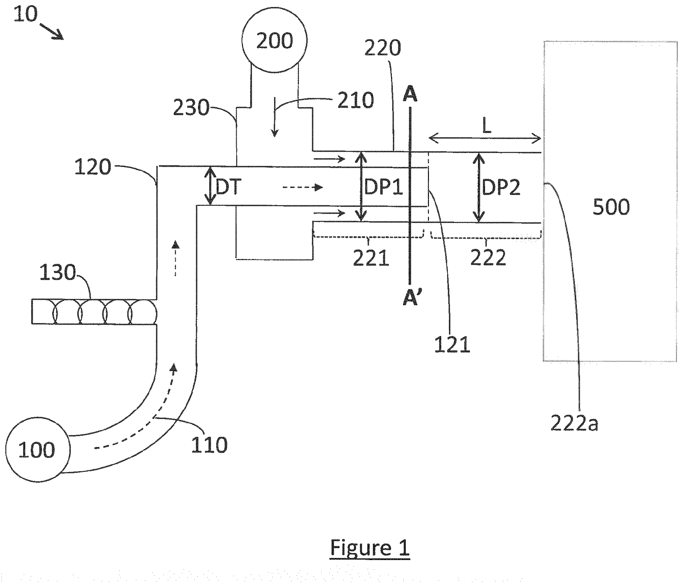

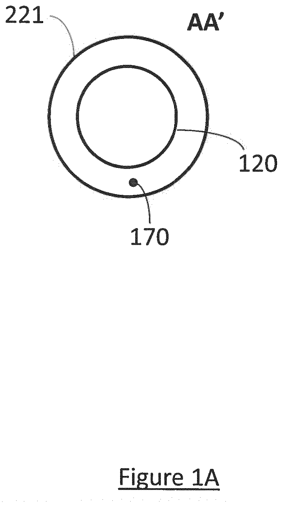

La Figure 1 est un exemple d'un premier mode de réalisation de dispositif 10 d'injection de composé pulvérulent selon l'invention. Un four (non représenté) produit des fumées comportant des polluants gazeux qui sont transportés par une conduite de four 500 vers une cheminée (non représentée) afin de les évacuer dans l'atmosphère.

En fonctionnement, le dispositif d'injection selon l'invention génère deux flux de gaz :

- un flux de gaz dit de transport 110, engendré par une soufflante 100 à débit ajustable, (soufflante latérale dans l'exemple illustré) ; ce flux de gaz de transport circule dans une conduite de transport 120 reliée à la soufflante ; sur le trajet de ce flux de transport se trouve un système de dosage de composé pulvérulent 130, relié à un réservoir de composé pulvérulent (non représenté), de façon à ce que ce flux de transport se charge en composé pulvérulent;
- un flux de gaz dit périphérique 210 engendré par une soufflante à débit variable 200; ce flux de gaz périphérique est délivré dans une chambre 230 puis circule dans une conduite périphérique 220 reliée à cette chambre.

La conduite de transport 120 traverse la chambre 230 de façon étanche et en ressort de façon concentrique à la conduite périphérique 220 à l'intérieur de celle-ci. Elle s'interrompt à son extrémité amont 121 située dans un plan sécant entre la première partie 221 et la deuxième partie 222 de la conduite périphérique 220.

Comme illustré par la coupe A-A' de la figure 1A, il existe donc un espace annulaire 170 entre la conduite de transport axiale 120 et la première partie 221 de la conduite périphérique, dans lequel circule le flux de gaz périphérique 210, le flux de gaz de transport 110 circulant dans la conduite de transport 120. Le dispositif fournit donc dans la conduite de four deux jets de gaz, un jet de gaz de transport 110, chargé en composé pulvérulent, axial, et un jet de gaz périphérique 210 qui entoure le jet de gaz de transport.

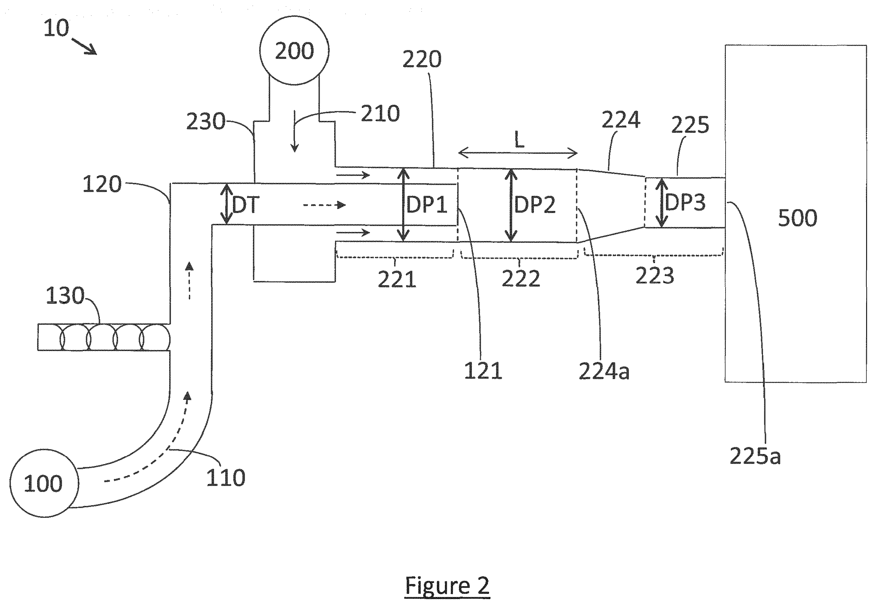

Dans un mode de réalisation particulier de la présente invention, illustré à la figure 2, la conduite périphérique 220 comprend en outre une troisième partie (223) comportant une portion amont (224) munie d'une extrémité amont (224a) et une portion aval (225) munie d'une extrémité aval (225a), de diamètre DP3 inférieur au diamètre DP2, ladite extrémité amont étant prévue pour être reliée à l'extrémité aval de la deuxième partie de la conduite périphérique, ladite extrémité aval étant prévue pour être reliée à la conduite de four.

Avantageusement, ladite portion amont (224) de la troisième partie de la conduite périphérique présente une forme conique tronquée.

Le rétrécissement de diamètre de la conduite périphérique 220 au niveau de sa troisième partie 223 provoque, par conservation de masse, un deuxième effet venturi permettant une accélération supplémentaire des flux des gaz de transport et périphérique et donc une amélioration supplémentaire de la pénétrabilité du composé pulvérulent dans la conduite de four.

De manière générale, la conduite périphérique 220 est connectée à la conduite de four 500 de façon radiale. Le flux de gaz périphérique 210, périphérique au flux de gaz de transport 110, maintient en forme et guide ce flux de gaz de transport 110 lorsqu'ils pénètrent dans la conduite de four 500, permettant d'atteindre la veine centrale de la conduite de four 500 sans qu'il soit besoin d'une lance pénétrante.

De plus, les débits des soufflantes 100 et 200 étant ajustables séparément, le dispositif permet de s'adapter à une grande variété de conditions d'utilisation, notamment en termes de vitesse des fumées, de concentration en gaz acides, de diamètre de la conduite,...

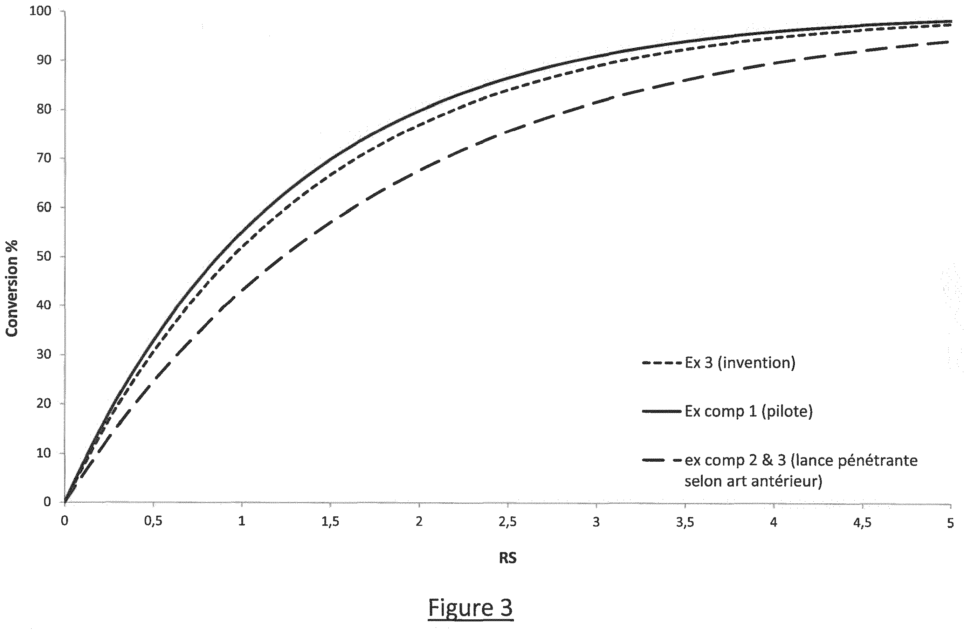

Bien entendu l'invention couvre des formes différentes du dispositif, pourvu que l'on obtienne, en entrée dans la conduite de four, un jet de gaz de transport 110 chargé en matériau pulvérulent d'abattement et un jet de gaz périphérique 210. Par exemple, dans les figures 1 et 3 de la présente demande, la conduite périphérique 220 est connectée à la conduite de four 500 de manière perpendiculaire, autrement dit avec un angle de 90° entre les axes des deux conduites. De manière alternative, cette conduite périphérique 220 pourrait évidemment être connectée à la conduite de four 500 avec un angle entre les axes des deux conduites supérieur ou inférieur à 90°.

## Simulations numériques

Afin de démontrer l'efficacité du dispositif et du procédé selon la présente invention, des simulations numériques de répartition de chaux éteinte pulvérulente au sein d'une conduite de four contenant des gaz de fumées ont été réalisées en considérant différents dispositifs d'injection. Plus précisément, la répartition de la chaux obtenue à l'aide du dispositif selon la présente invention et de son procédé a été comparée à celle obtenue avec le dispositif et le procédé du document US 2013/0125749, à paramètres de fonctionnement comparables (autrement dit, en fixant la géométrie de la conduite de four, la composition et la vitesse des gaz de fumées qui la traversent, la position et la section du conduit de transport de chaux, ainsi que le débit d'air de transport et de chaux, lequel est calculé théoriquement par rapport à la quantité de polluants présents dans les gaz de fumées, selon les performances de capture de la chaux).

La répartition de la chaux au sein de la conduite de four est évaluée par CFD (Computational Fluid Dynamics) à l'aide du facteur de répartition Phi qui correspond à la concentration de chaux dans les gaz de fumées, à un point donné de ladite conduite, lorsque la chaux est injectée transversalement.

Ce facteur de répartition dépend notamment de la géométrie de la conduite de four et est défini comme suit :

$$Phi = \frac{Vi}{Vtot}$$

Où
$V_i$ correspond au volume de la chaux pulvérulente ;
$V_{tot}$ correspond à la somme du volume de la chaux pulvérulente et des volumes de tous les gaz présents dans les gaz de fumées.

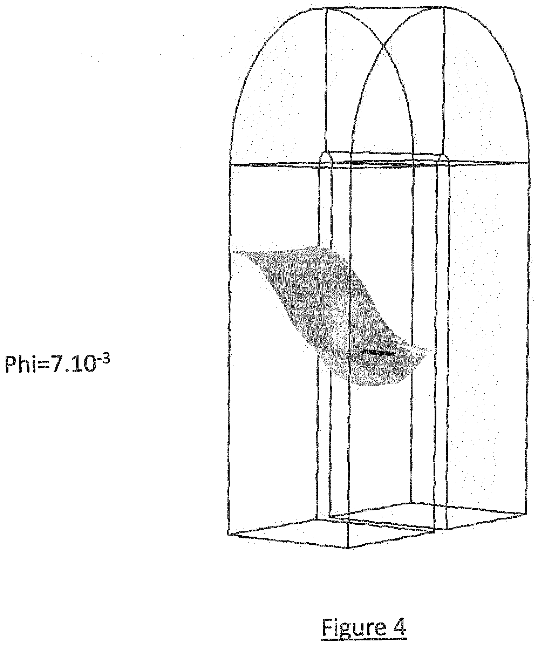

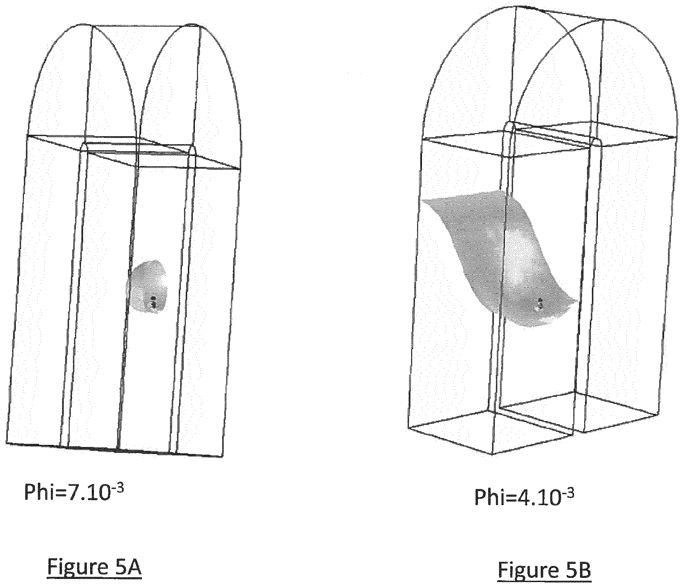

Dans les simulations numériques effectuées, la conduite de four considérée est en forme de U inversé (voir figures 4 et 5) et présente une section carrée de 4m de long.

Pour pouvoir comparer l'efficacité du dispositif de la présente invention à celle du dispositif de l'art antérieur US2013/0125749, il faut tout d'abord déterminer le facteur de répartition optimal $Phi_{opt}$. Celui-ci correspond à la concentration de chaux dans les gaz de fumées à atteindre pour que cette chaux se répartisse de manière optimale de sorte à recouvrir l'intégralité de la section de la conduite de four considérée.

Dans le cas présent, ce facteur de répartition optimal a été déterminé en simulant un dispositif comprenant une lance pénétrante (ne contenant dès lors pas de gaz périphérique), considéré à l'heure actuelle comme étant le dispositif le plus efficace en termes de répartition de composé pulvérulent. La lance est introduite dans la conduite de four à 1 m de profondeur.

Dans cette configuration et pour la conduite de four considérée, le facteur de répartition optimal $Phi_{opt}$ vaut environ $7.10^{-3}$. En effet, pour cette valeur de Phi, la répartition de la chaux dans cette conduite de four est optimale et prend la forme d'un écran transversal, recouvrant l'intégralité de la section d'une jambe du U inversé, à 50 cm au-dessus du point d'injection. Cette situation ($Phi_{opt} = 7.10^{-3}$) a donc été considérée comme étant le facteur de répartition optimal à atteindre.

Dispositifs étudiés :

a) Dispositif et procédé selon la présente invention.
b) Dispositif et procédé selon le document US2013/0125749.

Les résultats de cette simulation sont indiqués aux figures 4 (la présente invention) et 5 (état de la technique US 2013/0125749).

Comme on peut le constater à la figure 4, lorsqu'on utilise un flux de gaz périphérique avec un débit massique de 0,1 à 0,2 % par rapport au débit de gaz de fumées, selon l'invention, on parvient à obtenir un facteur de répartition identique au facteur de répartition optimal (Phi$_d$=7.10$^{-3}$) dans un plan transversal situé à 50 cm au-dessus du point d'injection. La présente invention est donc capable d'injecter de la chaux éteinte pulvérulente avec la même pénétrabilité que la lance pénétrante mais sans avoir recours à un dispositif invasif.

Par contre, en utilisant le dispositif et le procédé selon la demande de brevet US 2013/0125749, on génère un flux de gaz périphérique avec un débit très important par rapport au gaz de fumées (débit massique de gaz périphérique 10 fois supérieur à celui de la présente invention), ce qui crée une grande turbulence qui est d'ailleurs recherchée par le document US 2013/0125749. Dans ce cas, la zone dans laquelle la chaux est répartie uniformément est très petite, requérant, pour atteindre le facteur de répartition optimal de chaux dans la conduite de four, de placer au moins trois dispositifs selon cet art antérieur.

En effet, comme on peut la voir à la figure 5A, la zone dans laquelle la chaux est répartie uniformément est très concentrée. Dans ce cas, une lance seule ne permet pas d'atteindre un Phi =7.10$^{-3}$ dans un plan transversal situé 50 cm au-dessus du point d'injection. Effectivement, dans ce plan transversal, le facteur de répartition Phi vaut 4.10$^{-3}$ (figure 5B), ce qui rend la dispersion de la chaux 1,75 fois moins efficace comparativement à la présente invention.

Il faudrait en fait utiliser trois dispositifs selon l'art antérieur US 2013/0125749 pour obtenir une répartition analogue à celle d'une seule lance pénétrante de l'art antérieur.

## Exemples

Afin d'évaluer l'efficacité de la dispersion obtenue selon la présente invention, l'abattement du SO$_2$ à ultra haute température par une chaux éteinte pulvérulente telle qu'obtenue selon le procédé décrit dans le document WO2007000433 a été étudié.

Dans la gamme de température comprise entre 850 et 1150°C, la chaux hydratée Ca(OH)$_2$ réagit avec SO$_2$ pour former CaSO$_4$ selon les équations suivantes :

$$Ca(OH)_2 \rightarrow CaO + H_2O$$

$$CaO + SO_2 + \tfrac{1}{2} O_2 \rightarrow CaSO_4$$

Dans cette gamme de température, la réaction entre l'hydroxyde de calcium et le SO$_2$ est sélective et rapide.

*Sélective* car excepté le SO$_2$, aucun des autres composés présents dans les fumées (tel que le CO$_2$) ne possède un produit de réaction stable dans la gamme de température susmentionnée. Pour les besoins de l'expérimentation en effet, même si l'hydroxyde de calcium permet d'abattre d'autres gaz acides, on ne s'intéressera qu'à la neutralisation de SO$_2$ par l'hydroxyde de calcium de façon à pouvoir doser le produit de la réaction à savoir CaSO$_4$ et ainsi accéder à l'efficacité du procédé étudié, notamment au rapport stœchiométrique RS.

*Rapide* car la vitesse de la réaction entre la chaux éteinte et le SO$_2$ augmente exponentiellement avec la température selon la loi d'Arrhenius. Ainsi, à 900°C le temps de contact entre les gaz acides et la chaux éteinte peut être inférieur à 0,5 seconde.

Dans la suite, les résultats obtenus dans les trois conditions suivantes ont été comparés :

- Exemple comparatif 1 : Installation pilote qui peut être assimilée à une situation de mélange parfait.

- Exemples comparatifs 2 et 3 : Installations industrielles avec une injection de chaux éteinte pulvérulente réalisée au moyen d'une lance métallique pénétrante selon l'art antérieur.

- Exemple : Installation industrielle avec une injection de chaux éteinte réalisée à l'aide du dispositif de la présente invention.

La comparaison a été réalisée pour un abattement de 70% du SO$_2$, ce qui représente l'abattement moyen recherché pour ce type de procédé.

**Exemple comparatif 1 : Installation pilote**

L'installation pilote a permis de mesurer l'évolution de la conversion du $SO_2$ en fonction du rapport stœchiométrique RS (nombre de moles d'hydroxyde de calcium/nombre de moles de $SO_2$ en entrée) dans un cas parfait, c'est-à-dire en l'absence de poussière, avec une température parfaitement répartie sur l'ensemble de la zone réactionnelle et sans zone morte ou turbulente. Une telle installation pilote est également décrite dans le document WO2007000433.
Les paramètres des gaz de fumées présents dans l'installation pilote sont les suivants :

- ■ Débit total : 2 $Nm^3$/h
- ■ Température : 950°C
- ■ Teneur en $SO_2$ : 1500 ppm
- ■ Teneur en $CO_2$ : 10% vol
- ■ Teneur en $O_2$: 6% vol

Pour l'installation pilote, le rapport stœchiométrique (RS) mesuré est de 1,5 pour obtenir 70% de conversion du $SO_2$. Nous pouvons donc en conclure que dans le cadre d'un abattement du $SO_2$ à une température comprise entre 850 et 1150°C, le RS d'un mélange parfait sera proche de 1,5 pour 70% de conversion du $SO_2$.
De nombreux essais industriels ont été réalisés à l'aide de lances pénétrantes en métal visant à maximiser l'efficacité de la dispersion des particules solides dans le flux de fumée.
Les deux exemples comparatifs présentés ci-dessous reprennent les ratios conversion/RS les plus élevés obtenus à ce jour.

**Exemple comparatif 2.- Essai industriel avec lance métallique pénétrante (selon l'art antérieur)**

Une chaux éteinte similaire à celle utilisée dans l'installation pilote a été injectée à une vitesse de 15m/s à l'aide d'une lance pénétrante métallique dans une chambre de postcombustion (conduite de four), dans laquelle la combustion des imbrûlés a lieu.
Les paramètres des gaz de fumées sont les suivants :

- ■ Débit total : 46 750 $Nm^3$/h
- ■ Température moyenne: 925°C
- ■ Teneur en $SO_2$ moyenne : 450 ppm
- ■ Teneur en $CO_2$: 15% vol
- ■ Teneur en $O_2$: 10% vol

Le temps de séjour de la chaux hydratée dans la conduite de four est d'environ 1 à 1,5 secondes. Dans le cas de l'exemple comparatif 2, le rapport stœchiométrique mesuré est de 2 pour obtenir 70% de conversion du $SO_2$.

**Exemple comparatif 3.- Essai industriel avec lance métallique pénétrante (selon l'art antérieur)**

Une chaux éteinte similaire à celle utilisée dans l'installation pilote a été injectée à une vitesse de 15m/s à l'aide d'une lance pénétrante métallique dans une chambre de postcombustion (conduite de four).
Les paramètres des gaz de fumées sont les suivants :

- ■ Débit total : 140 000 $Nm^3$/h
- ■ Température moyenne: 925°C
- ■ Teneur en $SO_2$ moyenne: 390 ppm
- ■ Teneur en $CO_2$ : 15% vol
- ■ Teneur en $O_2$: 8% vol

Le temps de séjour de la chaux hydratée dans la conduite de four est d'environ 1 à 1,5 secondes. Dans le cas de l'exemple comparatif 3, le rapport stœchiométrique mesuré est de 2,3 pour obtenir 70% de conversion du $SO_2$.
Le rapport stœchiométrique moyen pour les exemples comparatifs 2 et 3 est de 2,1 pour 70% de conversion du $SO_2$.

**Exemple .- Essai industriel réalisé selon le procédé de la présente invention**

Une chaux éteinte similaire à celle utilisée dans l'installation pilote a été injectée à l'aide du dispositif de la présente invention dans une chambre de postcombustion (conduite de four).

Les paramètres des gaz de fumées sont les suivants :

- ■ Débit total : 82 000 Nm$^3$/h
- ■ Température moyenne : 900°C
- ■ Teneur en $SO_2$ moyenne: 395 ppm
- ■ Teneur en $O_2$: 17% vol
- ■ Teneur en $CO_2$: 15% vol

Les paramètres du dispositif d'injection sont les suivantes :

- ■ Diamètre DT de la conduite de transport 120 : 88,9 mm,
- ■ Diamètre DP2 de la deuxième partie de la conduite périphérique 222 : 107,1 mm,
- ■ Vitesse de l'air de transport $V_T$ : 15 m/s,
- ■ Vitesse de l'air périphérique $V_P$ : 44 m/s,
- ■ Débit d'air de transport $Q_T$: 420 Nm$^3$/h,
- ■ Débit d'air périphérique $Q_P$: 290 Nm$^3$/h.

Le temps de séjour de la chaux hydratée dans la conduite de four est de 0,1 seconde.

Le procédé selon l'invention a permis d'obtenir des rapports stœchiométriques (RS) de 1,6 pour 70% d'abattement du $SO_2$.

La figure 3 reprend l'ensemble des résultats obtenus sur l'installation pilote (exemple comparatif 1) ; à l'aide du dispositif de la présente invention (exemple) ; et à l'aide d'une lance métallique pénétrante de l'art antérieur (moyenne des exemples comparatifs 2 et 3).

Comme on peut le constater à la figure 3, les valeurs obtenues selon le procédé de la présente invention se rapprochent des valeurs obtenues avec l'installation pilote.

Comme mentionné précédemment, lorsque l'efficacité de la dispersion des particules solides augmente, les valeurs mesurées sur site se rapprochent des valeurs obtenues avec le pilote.

Ces résultats montrent que le dispositif et le procédé selon la présente invention permettent, à taux de conversion identique, une économie de chaux éteinte pulvérulente de l'ordre de 23% par rapport aux lances métalliques pénétrantes de l'art antérieur.

L'efficacité de la dispersion des particules solides dans le mélange fluide est donc meilleure selon le dispositif et le procédé de l'invention comparativement à l'utilisation de lances métalliques pénétrantes de l'art antérieur. Ces dernières posent par ailleurs d'autres problèmes en termes de transport de la poudre, de sécurité et de facilité d'installation, également résolus par le dispositif et le procédé selon l'invention.

**Revendications**

1. Dispositif (10) d'injection de composé pulvérulent d'abattement de polluants de gaz de fumées dans une conduite de four (500), ledit dispositif comprenant :

   - une chambre (230) reliée à une conduite périphérique (220) et agencée pour être reliée d'une part à un premier élément soufflant (200) agencé pour souffler un gaz périphérique (210) dans ladite chambre et dans ladite conduite périphérique et d'autre part à ladite conduite de four par l'intermédiaire de ladite conduite périphérique,
   - ladite conduite périphérique (220) comprenant une première partie (221) de diamètre DP1, reliée à la chambre, et une deuxième partie (222) de diamètre DP2, opposée à la première partie, présentant une extrémité aval (222a), et prévue pour être en communication avec la conduite de four,
   - une conduite de transport (120) de composé pulvérulent prévue pour être reliée à un deuxième élément soufflant (100) agencé pour souffler un gaz de transport (110) dans ladite conduite de transport, simultanément au jet de gaz périphérique, ladite conduite de transport présentant un diamètre DT et une extrémité aval (121),

   ladite première partie (221) de la conduite périphérique étant traversée par ladite conduite de transport (120) de manière concentrique et longitudinalement, de telle manière que l'extrémité aval (121) de ladite conduite de transport soit localisée dans un plan sécant entre la première et la deuxième partie de la conduite périphérique, le diamètre (DT) de la conduite de transport (120) et le diamètre (DP2) de la deuxième partie de la conduite périphérique (222) étant reliés par la relation suivante :

$$0 < DP2 - DT < \frac{1}{2} \cdot DT,$$

**caractérisé en ce que** ladite conduite de transport (120) traverse la chambre (230) de façon étanche et en ressort de façon concentrique à la conduite périphérique (220) à l'intérieur de ladite conduite périphérique (220), et **en ce que** la deuxième partie de la conduite périphérique présente une longueur L supérieure ou égale au diamètre (DP2) de la deuxième partie de la conduite périphérique.

2. Dispositif d'injection de composé pulvérulent selon la revendication 1, dans lequel l'extrémité aval (222a) de la deuxième partie de la conduite périphérique est agencée pour être directement reliée à la conduite de four.

3. Dispositif d'injection de composé pulvérulent selon la revendication 1, dans lequel la conduite périphérique comprend en outre une troisième partie (223) comportant une portion amont (224) munie d'une extrémité amont (224a) et une portion aval (225) munie d'une extrémité aval (225a), de diamètre DP3 inférieur au diamètre DP2, ladite extrémité amont étant prévue pour être reliée à l'extrémité aval de la deuxième partie de la conduite périphérique, ladite extrémité aval étant prévue pour être reliée à la conduite de four.

4. Dispositif d'injection de composé pulvérulent selon la revendication 3, dans lequel l'extrémité aval (225a) de la troisième partie de la conduite périphérique est agencée pour être directement reliée à la conduite de four.

5. Dispositif d'injection de composé pulvérulent selon l'une quelconque des revendications 3 ou 4, dans lequel ladite portion amont (224) de la troisième partie de la conduite périphérique présente une forme conique tronquée.

6. Dispositif d'injection de composé pulvérulent selon l'une des revendications précédentes, comprenant en outre :

   - un premier élément soufflant (200) relié à la chambre (230) et agencé pour souffler un gaz périphérique (210) dans ladite chambre et dans la conduite périphérique (220),
   - un deuxième élément soufflant (100) relié à la conduite de transport (120) et agencé pour souffler un gaz de transport (110) dans ladite conduite de transport,
   - un moyen de dosage (130) de composé pulvérulent relié d'une part à un réservoir de composé pulvérulent et d'autre part à la conduite de transport, en aval dudit deuxième élément soufflant par rapport à une direction d'écoulement du gaz de transport, agencés pour que le gaz de transport entraine le composé pulvérulent dosé.

7. Dispositif d'injection de composé pulvérulent selon la revendication 6, dans lequel ledit premier élément soufflant (200) et le deuxième élément soufflant (100) comprennent des moyens d'ajustements de débits de telle façon que les débits du premier élément soufflant (200) et du deuxième élément soufflant (100) soient ajustables séparément.

8. Conduite de four munie d'au moins un dispositif d'injection de composé pulvérulent d'abattement selon l'une quelconque des revendications 1 à 7.

9. Procédé de traitement de gaz de fumées dans une conduite de four selon la revendication 8, par un composé pulvérulent d'abattement de polluants de gaz de fumées, comprenant :

   - une injection d'un jet de gaz de transport présentant un débit massique $Q_T$, ledit jet de gaz de transport étant prévu pour transporter ledit composé pulvérulent d'abattement au sein desdites fumées présentant un débit de gaz de fumées $Q_F$,
   - simultanément, une injection d'un jet de gaz, de manière périphérique au jet de gaz de transport, formant un jet de gaz périphérique présentant un débit massique $Q_P$,
   - ledit débit massique de gaz périphérique rapporté audit débit massique des gaz de fumées formant un ratio $Q_P/Q_F$ compris entre 0,05% et 0,25 %.

10. Procédé de traitement de gaz de fumées dans une conduite de four selon la revendication 9, dans lequel ledit gaz de transport présente une vitesse $V_T$ et ledit gaz périphérique présente une vitesse $V_P$, la vitesse de gaz périphérique $V_P$ étant comprise entre deux fois et vingt fois la vitesse du gaz de transport $V_T$ selon $2V_T \leq V_P \leq 20V_T$.

11. Procédé de traitement de gaz de fumées dans une conduite de four selon la revendication 9 ou la revendication 10, dans lequel le débit massique du gaz de transport $Q_T$ ajouté au débit massique du gaz périphérique $Q_P$ rapporté au débit massique des gaz de fumées $Q_F$ forme un rapport $(Q_T + Q_P)/Q_F$ compris entre 0,1 et 0,5%.

**12.** Procédé de traitement de gaz de fumées dans une conduite de four selon l'une des revendications 9 à 11, dans lequel le composé pulvérulent est injecté selon un débit massique $Q_A$, le débit massique du gaz de transport $Q_T$ rapporté au débit massique de composé pulvérulent formant un ratio $Q_T/Q_A$ compris entre 5 et 10.

**13.** Procédé de traitement de gaz de fumées selon l'une des revendications 9 à 12, dans lequel l'injection des jets de gaz de transport et de gaz périphérique s'effectue au niveau de la face interne de la conduite de four.

**14.** Procédé de traitement de gaz de fumées selon l'une des revendications 9 à 13, dans lequel la température des fumées à traiter est comprise entre 850° C et 1150° C.

**15.** Procédé de traitement de gaz de fumées selon l'une des revendications 9 à 14, dans lequel la vitesse des fumées à traiter est comprise entre 2 m/s et 150 m/s, de préférence entre 3 et 50 m/s, en particulier entre 5 et 30 m/s.

**16.** Procédé de traitement de gaz de fumées selon l'une des revendications 9 à 15, dans lequel les vitesses des jets de gaz de transport et de gaz périphérique sont ajustées indépendamment l'une de l'autre.

**17.** Procédé de traitement de gaz de fumées selon l'une des revendications 9 à 16, dans lequel le gaz de transport et/ou le gaz périphérique est/sont de l'air, indépendamment l'un de l'autre.

**18.** Procédé de traitement de gaz de fumées selon l'une des revendications 9 à 17, dans lequel les gaz de fumées comprennent des polluants choisis dans le groupe constitué des gaz acides, notamment soufrés et/ou halogénés, des métaux lourds, des furanes, des dioxines et leurs mélanges.

**19.** Procédé de traitement de gaz de fumées selon la revendication 18, dans lequel les gaz acides comprennent des polluants choisis dans le groupe constitué du $SO_2$, $SO_3$, HCl, HF, HBr, et de leurs mélanges.

**20.** Procédé de traitement de gaz de fumées selon l'une des revendications 9 à 19, dans lequel le composé pulvérulent d'abattement comprend un carbonate, un hydroxyde et/ou un oxyde d'un métal alcalino-terreux choisi parmi le calcium et le magnésium, ou un mélange de ceux-ci.

**21.** Procédé selon l'une quelconque des revendications 9 à 20, dans lequel le composé pulvérulent d'abattement comprend un composé calco-magnésien de formule $aCaCO_3.bMgCO_3.xCaO.yMgO.zCa(OH)_2.tMg(OH)_2.uI$, dans laquelle I représente des impuretés, a, b, x, y, z, t et u étant des fractions massiques chacune comprise entre 0 et 100%, avec $u \leq 5\%$, par rapport au poids total dudit un composé calco-magnésien, la somme des fractions massiques a+b+x+y+z+t+u étant égale à 100% du poids total dudit composé calco-magnésien.

**22.** Procédé de traitement de gaz de fumées selon l'une des revendications 9 à 21, dans lequel le composé pulvérulent d'abattement comprend plus de 50% en poids, en particulier plus de 90% en poids de $Ca(OH)_2$.

**Patentansprüche**

**1.** Vorrichtung (10) zum Einspritzen einer pulverartigen Zusammensetzung zur Abschwächung von Rauchgasschadstoffen in eine Ofenleitung (500), wobei die Vorrichtung umfasst:

- eine Kammer (230), die mit einer Umfangsleitung (220) verbunden ist und eingerichtet ist, um einerseits mit einem ersten Blaselement (200), das eingerichtet ist, um ein Umfangsgas (210) in die Kammer und in die Umfangsleitung zu blasen, und andererseits über die Umfangsleitung mit der Ofenleitung verbunden zu sein,
- wobei die Umfangsleitung (220) einen ersten Teil (221) mit Durchmesser DP1 umfasst, der mit der Kammer verbunden ist, und einen zweiten Teil (222) mit Durchmesser DP2, gegenüber vom ersten Teil, der ein nachgelagertes Ende (222a) aufweist und vorgesehen ist, um mit der Ofenleitung zu kommunizieren,
- eine Transportleitung (120) einer pulverartigen Zusammensetzung, die vorgesehen ist, um mit einem zweiten Blaselement (100) verbunden zu sein, das eingerichtet ist, um ein Transportgas (110) gleichzeitig zum Umfangsgasstrahl in die Transportleitung zu blasen, wobei die Transportleitung einen Durchmesser DT und ein nachgelagertes Ende (121) aufweist,

wobei der erste Teil (221) der Umfangsleitung von der Transportleitung (120) auf konzentrische und längsverlaufende Weise durchquert wird, sodass das nachgelagerte Ende (121) der Transportleitung in einer

**14**

Ebene liegt, die den ersten und den zweiten Teil der Umfangsleitung schneidet,
wobei der Durchmesser (DT) der Transportleitung (120) und der Durchmesser (DP2) des zweiten Teils der Umfangsleitung (222) durch das folgende Verhältnis zusammenhängen:

$$0 < DP2 - DT < \tfrac{1}{2} DT,$$

**dadurch gekennzeichnet, dass** die Transportleitung (120) die Kammer (230) auf dichte Weise durchquert und daraus auf konzentrische Weise an der Umfangsleitung (220) im Inneren der Umfangsleitung (220) heraustritt, und dass der zweite Teil der Umfangsleitung eine Länge L aufweist, die größer oder gleich dem Durchmesser (DP2) des zweiten Teils der Umfangsleitung ist.

2. Vorrichtung zum Einspritzen einer pulverartigen Zusammensetzung nach Anspruch 1, wobei das nachgelagerte Ende (222a) des zweiten Teils der Umfangsleitung eingerichtet ist, um unmittelbar mit der Ofenleitung verbunden zu sein.

3. Vorrichtung zum Einspritzen einer pulverartigen Zusammensetzung nach Anspruch 1, wobei die Umfangsleitung ferner einen dritten Teil (223) umfasst, der einen vorgelagerten Abschnitt (224) umfasst, der mit einem vorgelagerten Ende (224a) ausgestattet ist, und einen nachgelagerten Abschnitt (225), der mit einem nachgelagerten Ende (225a) ausgestattet ist, mit Durchmesser DP3 kleiner als der Durchmesser DP2, wobei das vorgelagerte Ende vorgesehen ist, um mit dem nachgelagerten Ende des zweiten Teils der Umfangsleitung verbunden zu sein, wobei das nachgelagerte Ende vorgesehen ist, um mit der Ofenleitung verbunden zu sein.

4. Vorrichtung zum Einspritzen einer pulverartigen Zusammensetzung nach Anspruch 3, wobei das nachgelagerte Ende (225a) des dritten Teils der Umfangsleitung eingerichtet ist, um unmittelbar mit der Ofenleitung verbunden zu sein.

5. Vorrichtung zum Einspritzen einer pulverartigen Zusammensetzung nach einem der Ansprüche 3 oder 4, wobei der vorgelagerte Abschnitt (224) des dritten Teils der Umfangsleitung eine kegelstumpfförmige Form aufweist.

6. Vorrichtung zum Einspritzen einer pulverartigen Zusammensetzung nach einem der vorstehenden Ansprüche, ferner umfassend:

   - ein erstes Blaselement (200), das mit der Kammer (230) verbunden ist und eingerichtet ist, um ein Umfangsgas (210) in die Kammer und in die Umfangsleitung (220) zu blasen,
   - ein zweites Blaselement (100), das mit der Transportleitung (120) verbunden ist und eingerichtet ist, um ein Transportgas (110) in die Transportleitung zu blasen,
   - ein Dosierungsmittel (130) einer pulverartigen Zusammensetzung, das einerseits mit einem Behälter einer pulverartigen Zusammensetzung und andererseits mit der Transportleitung verbunden ist, in Bezug auf eine Strömungsrichtung des Transportgases dem zweiten Blaselement nachgelagert, eingerichtet, damit das Transportgas die dosierte pulverartige Zusammensetzung mitführt.

7. Vorrichtung zum Einspritzen einer pulverartigen Zusammensetzung nach Anspruch 6, wobei das erste Blaselement (200) und das zweite Blaselement (100) Durchsatzeinstellungsmittel derart umfassen, dass der Durchsatz des ersten Blaselements (200) und des zweiten Blaselements (100) separat einstellbar sind.

8. Ofenleitung, die mit mindestens einer Vorrichtung zum Einspritzen einer pulverartigen Zusammensetzung zur Abschwächung nach einem der Ansprüche 1 bis 7 ausgestattet ist.

9. Verfahren zur Behandlung von Rauchgasen in einer Ofenleitung nach Anspruch 8 durch eine pulverartige Zusammensetzung zur Abschwächung von Rauchgasschadstoffen, umfassend:

   - eine Einspritzung eines Transportgasstrahls, der einen Massendurchsatz $Q_T$ aufweist, wobei der Transportgasstrahl vorgesehen ist, um die pulverartige Zusammensetzung zur Abschwächung innerhalb der Rauche zu transportieren, die einen Rauchgasdurchsatz $Q_F$ aufweisen,
   - gleichzeitig, eine Einspritzung eines Gasstrahls auf umfängliche Weise zum Transportgasstrahl, einen Umfangsgasstrahl bildend, der einen Massendurchsatz $Q_P$ aufweist,

wobei der Massendurchsatz von Umfangsgas bezogen auf den Massendurchsatz der Rauchgase ein Verhältnis $Q_P/Q_F$ zwischen 0,05% und 0,25% bildet.

10. Verfahren zur Behandlung von Rauchgasen in einer Ofenleitung nach Anspruch 9, wobei das Transportgas eine Geschwindigkeit $V_T$ aufweist und das Umfangsgas eine Geschwindigkeit $V_P$ aufweist, wobei die Geschwindigkeit des Umfangsgases $V_P$ zwischen dem Zweifachen und dem Zwanzigfachen der Geschwindigkeit des Transportgases $V_T$ beträgt, gemäß $2V_T \leq V_P \leq 20V_T$.

11. Verfahren zur Behandlung von Rauchgasen in einer Ofenleitung nach Anspruch 9 oder Anspruch 10, wobei der Massendurchsatz des Transportgases $Q_T$, hinzugefügt zum Massendurchsatz des Umfangsgases $Q_P$, bezogen auf den Massendurchsatz der Rauchgase $Q_F$ ein Verhältnis $(Q_T + Q_P)Q_F$ zwischen 0,1 und 0,5% bildet.

12. Verfahren zur Behandlung von Rauchgasen in einer Ofenleitung nach einem der Ansprüche 9 bis 11, wobei die pulverartige Zusammensetzung gemäß einem Massendurchsatz $Q_A$ eingespritzt wird, wobei der Massendurchsatz des Transportgases $Q_T$ bezogen auf den Massendurchsatz der pulverartigen Zusammensetzung ein Verhältnis $Q_T/Q_A$ zwischen 5 und 10 bildet.

13. Verfahren zur Behandlung von Rauchgasen nach einem der Ansprüche 9 bis 12, wobei die Einspritzung der Transportgas- und Umfangsgasstrahlen auf der Innenseite der Ofenleitung erfolgt.

14. Verfahren zur Behandlung von Rauchgasen nach einem der Ansprüche 9 bis 13, wobei die Temperatur der zu behandelnden Rauche zwischen 850 °C und 1150 °C beträgt.

15. Verfahren zur Behandlung von Rauchgasen nach einem der Ansprüche 9 bis 14, wobei die Geschwindigkeit der zu behandelnden Rauche zwischen 2 m/s und 150 m/s, vorzugsweise zwischen 3 und 50 m/s, insbesondere zwischen 5 und 30m/s beträgt.

16. Verfahren zur Behandlung von Rauchgasen nach einem der Ansprüche 9 bis 15, wobei die Geschwindigkeiten der Transportgas- und Umfangsgasstrahlen unabhängig voneinander eingestellt sind.

17. Verfahren zur Behandlung von Rauchgasen nach einem der Ansprüche 9 bis 16, wobei das Transportgas und/oder das Umfangsgas unabhängig voneinander Luft ist/sind.

18. Verfahren zur Behandlung von Rauchgasen nach einem der Ansprüche 9 bis 17, wobei die Rauchgase Schadstoffe umfassen, die ausgewählt sind aus der Gruppe bestehend aus sauren, insbesondere schwefligen und/oder halogenierten, Gasen, Schwermetallen, Furanen, Dioxinen und ihren Gemischen.

19. Verfahren zur Behandlung von Rauchgasen nach Anspruch 18, wobei die sauren Gase Schadstoffe umfassen, die ausgewählt sind aus der Gruppe bestehend aus $SO_2$, $SO_3$, HCl, HF, HBr, und ihren Gemischen.

20. Verfahren zur Behandlung von Rauchgasen nach einem der Ansprüche 9 bis 19, wobei die pulverartige Zusammensetzung zur Abschwächung ein Karbonat, ein Hydroxid und/oder ein Oxyd eines Erdalkalimetalls umfasst, ausgewählt aus Kalzium und Magnesium, oder einem Gemisch von diesen.

21. Verfahren nach einem der Ansprüche 9 bis 20, wobei die pulverartige Zusammensetzung zur Abschwächung eine Kalk-Magnesium-Zusammensetzung der Formel $aCaCO_3.bM_9CO_{3.x}CaO.yMgO.zCa(OH)_2.tMg(OH)_2.uI$ umfasst, wobei I eine Verunreinigung darstellt, a, b, x, y, z, t und u Massenanteile sind, die jeweils zwischen 0 und 100%, mit $u \leq 5\%$ in Bezug auf das Gesamtgewicht der Kalk-Magnesium-Zusammensetzung darstellen, wobei die Summe der Massenanteile a+b+x+y+z+t+u gleich 100% des Gesamtgewichts der Kalk-Magnesium-Zusammensetzung ist.

22. Verfahren zur Behandlung von Rauchgasen nach einem der Ansprüche 9 bis 21, wobei die pulverartige Zusammensetzung zur Abschwächung mehr als 50 Gew.-%, insbesondere mehr als 90 Gew.-% $Ca(OH)_2$ umfasst.

**Claims**

1. A device (10) for injecting a powdered compound for the abatement of pollutants of flue gases into a furnace pipe (500), said device comprising:

- a chamber (230) connected to a peripheral pipe (220) and arranged to be connected on the one hand to a first blowing element (200) arranged to blow a peripheral gas (210) into said chamber and into said peripheral pipe and on the other hand to said furnace pipe via said peripheral pipe,

- said peripheral pipe (220) comprising a first portion (221) having a diameter DP1, connected to the chamber, and a second portion (222) having a diameter DP2, opposite the first portion, having a downstream end (222a), and intended to be in communication with the furnace pipe,

- a powdered compound conveying pipe (120) intended to be connected to a second blowing element (100) arranged to blow a conveying gas (110) into said conveying pipe, simultaneously to the peripheral gas jet, said conveying pipe having a diameter DT and a downstream end (121),

said first portion (221) of the peripheral pipe being passed through by said conveying pipe (120) concentrically and longitudinally, in such a way that the downstream end (121) of said conveying pipe is located in a secant plane between the first and the second part of the peripheral pipe,

the diameter (DT) of the conveying pipe (120) and the diameter (DP2) of the second part of the peripheral pipe (222) being related by the following relationship:

$0 < DP2 - DT < ½ DT$,

**characterised in that** said conveying pipe (120) passes through the chamber (230) impermeably and exits concentrically to the peripheral pipe (220) inside said peripheral pipe (220), and **in that** the second portion of the peripheral pipe has a length L greater than or equal to the diameter (DP2) of the second portion of the peripheral pipe.

2. The device for injecting powdered compound according to claim 1, wherein the downstream end (222a) of the second portion of the peripheral pipe is arranged to be directly connected to the furnace pipe.

3. The device for injecting a powdered compound according to claim 1, wherein the peripheral pipe further comprises a third portion (223) comprising an upstream portion (224) provided with an upstream end (224a) and a downstream portion (225) provided with a downstream end (225a), having a diameter DP3 smaller than the diameter DP2, said upstream end being intended to be connected to the downstream end of the second portion of the peripheral pipe, said downstream end being intended to be connected to the furnace pipe.

4. The device for injecting powdered compound according to claim 3, wherein the downstream end (225a) of the third portion of the peripheral pipe is arranged to be directly connected to the furnace pipe.

5. The device for injecting powdered compound according to any one of claims 3 or 4, wherein said upstream portion (224) of the third part of the peripheral pipe has a truncated conical shape.

6. The device for injecting a powdered compound according to any of the preceding claims, further comprising:

- a first blowing element (200) connected to the chamber (230) and arranged to blow a peripheral gas (210) into said chamber and into the peripheral pipe (220),

- a second blowing element (100) connected to the conveying pipe (120) and arranged to blow a conveying gas (110) into said conveying pipe,

- a powdered compound metering means (130) connected on the one hand to a powdered compound tank and on the other hand to the conveying pipe, downstream of said second blowing element with respect to a flow direction of the conveying gas, all arranged so that the conveying gas entrains the dosed powdered compound.

7. The device for injecting a powdered compound according to claim 6, wherein said first blowing element (200) and the second blowing element (100) comprise flow rate adjustment means in such a way that the flow rates of the first blowing element (200) and the second blowing element (100) are separately adjustable.

8. A furnace pipe provided with at least a device for injecting powdered abatement compound according to any one of claims 1 to 7.

9. A method of treating flue gas in a furnace pipe according to claim 8 with a powdered compound for the abatement of pollutants of flue gases, comprising:

- an injection of a conveying gas jet having a mass flow rate $Q_T$, said jet of conveying gas being intended to convey said reducing powdered compound into said flue gases having a flue gas flow rate $Q_F$,
- simultaneously, an injection of a gas jet, peripheral to the conveying gas jet, forming a peripheral gas jet having a mass flow rate $Q_P$,
said peripheral gas mass flow rate relative to said flue gas mass flow rate forms a ratio $Q_P/Q_F$ of between 0.05% and 0.25%.

10. The method of treating flue gases in a furnace pipe according to claim 9, wherein said conveying gas has a velocity $V_T$ and said peripheral gas has a velocity $V_P$, the peripheral gas velocity $V_P$ being between two times and twenty times the velocity of the conveying gas $V_T$ according to $2V_T \leq V_P \leq 20V_T$.

11. The method of treating flue gas in a furnace pipe according to claim 9 or claim 10, wherein the mass flow rate of the conveying gas $Q_T$ added to the mass flow rate of the peripheral gas $Q_P$ related to the mass flow rate of the flue gas $Q_F$ forms a ratio $(Q_T + Q_P)/Q_F$ of between 0.1 and 0.5%.

12. The method of treating flue gas in a furnace pipe according to any one of claims 9 to 11, wherein the powdered compound is injected at a mass flow rate $Q_A$, the mass flow rate of the conveying gas $Q_T$ referred to the mass flow rate of the powdered compound forming a ratio $Q_T/Q_A$ of between 5 and 10.

13. The method of treating flue gas according to any one of claims 9 to 12, wherein the injection of the conveying gas and peripheral gas jets is carried out at the inner face of the furnace pipe.

14. The method of treating flue gas according to any one of claims 9 to 13, wherein the temperature of the flue gas to be treated is between 850°C and 1150°C.

15. The method of treating flue gas according to any one of claims 9 to 14, wherein the velocity of the flue gas to be treated is between 2 m/s and 150 m/s, preferably between 3 and 50 m/s, in particular between 5 and 30 m/s.

16. The method of treating flue gas according to any one of claims 9 to 15, wherein the velocities of the conveying gas and peripheral gas jets are adjusted independently of each other.

17. The method of treating flue gas according to any one of claims 9 to 16, wherein the conveying gas and/or the peripheral gas is/are air, independently of each other.

18. The method of treating flue gas according to any one of claims 9 to 17, wherein the flue gas comprises pollutants selected from the group consisting of acidic gases, in particular sulphurous and/or halogenated, heavy metals, furans, dioxins and mixtures thereof.

19. The method of treating flue gas according to claim 18, wherein the acid gases comprise pollutants selected from the group consisting of $SO_2$, $SO_3$, HCl, HF, HBr, and mixtures thereof.

20. The method of treating flue gas according to any one of claims 9 to 19, wherein the reducing powdered compound comprises a carbonate, hydroxide and/or oxide of an alkaline earth metal selected from calcium and magnesium, or a mixture thereof.

21. The method according to any one of claims 9 to 20, wherein the powdered abatement compound comprises a calco-magnesian compound of formula $aCaCO_3.bMgCO_3.xCaO.yMgO.zCa(OH)_2.tMg(OH)_2.ul$, wherein l represents impurities, a, b, x, y, z, t and u being mass fractions each between 0 and 100%, with $u \leq 5\%$ relative to the total weight of said calco-magnesian compound, the sum of the mass fractions $a+b+x+y+z+t+u$ being equal to 100% of the total weight of said calco-magnesian compound.

22. The method of treating flue gas according to any one of claims 9 to 21, wherein the reducing powdered compound comprises more than 50 wt.%, in particular more than 90 wt.% of $Ca(OH)_2$.

Figure 1

221

AA'

120

170

Figure 1A

EP 3 311 075 B1

Figure 2

Figure 3

EP 3 311 075 B1

Phi=7.10$^{-3}$

Figure 4

Phi=7.10$^{-3}$

Figure 5A

Phi=4.10$^{-3}$

Figure 5B

**EP 3 311 075 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130125749 A
- EP 0337073 A
- WO 2007000433 A

**25**